# EUROPEAN PATENT SPECIFICATION

(11) **EP 0 276 900 B1**
(45) Date of publication and mention of the grant of the patent: **13.10.1993**
(21) Application number: 88300012.7
(22) Date of filing: 05.01.1988
(51) Int. Cl.: G01R 1/073, G01B 5/25, G01R 31/28

(54) **Apparatus and method for aligning two surfaces**
Verfahren und Vorrichtung zur Alignierung zweier Oberflächen
Appareil et méthode pour aligner deux surfaces

(30) Priority: 30.01.1987 US 13474
(43) Date of publication of application: 03.08.1988
(73) Proprietor: Hewlett-Packard Company, Palo Alto California 94303-0890 (US)
(72) Inventor: Matta, Farid, Mountain View§California 94040 (US)
(74) Representative: Colgan, Stephen James

(56) References cited:
- EP-A- 0 230 348
- DE-A- 2 708 345
- DE-B- 2 839 753
- DE-C- 929 094
- US-A- 4 379 363

## Description

### FIELD OF THE INVENTION

This invention relates to the field of surface aligners. In particular, this invention relates to the subfield of precision surface aligners.

### BACKGROUND OF THE INVENTION

There are many occasions when two surfaces must align precisely. When testing integrated circuit chips in wafer form, the test probes must be approximately coplanar with the device under test. A misalignment of 1 or more milli-radians (approximately .06 of a degree) is unacceptable in many situations.

The prior-art schemes for obtaining the proper parallelism are tedious manual procedures. They are based on measuring the distance between the two surfaces in several locations, and manually adjusting these distances until the difference between the highest and the lowest points are within a specified range.

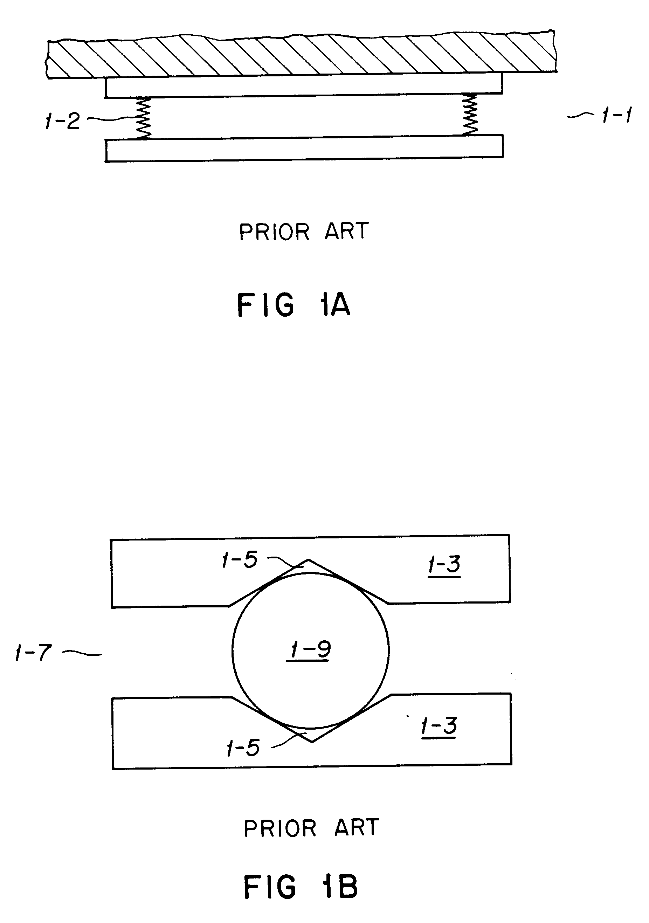

In one prior-art scheme shown in Figure 1A, a special plate 1 with holes in it is installed in place of the test probe. The distances between the special plate and the chuck are measured using a dial indicator. Manual adjustments are made repeatedly with adjustable spacers 1-2 until proper parallelism is achieved.

In another prior-art scheme, the measurements are made simultaneously in four quadrants of the calibration plate, and four LED's on an attached display will light up simultaneously when parallelism is achieved. Adjustments are still done manually as in the previous scheme. These tedious and slow prior-art schemes reduce the time available for testing and thereby increase the cost of testing. Since these prior-art schemes cannot be repeated for each wafer or for the different portions of a wafer, the test probes do not precisely align with the wafers.

A prior-art apparatus for aligning a surface is shown in Figure 1B. This apparatus is often used to precisely align mirrors with laser beams. It consists of a ball bearing 1-9 placed between two plates 1-3 with notches 1-5 cut into them. This apparatus 1-7 cannot be used in applications such as IC testing because of the relatively large force required to move the plate 1-3. In order for the plates 1-3 to move, they must overcome the relatively large sliding friction between the ball 1-9 and the plates 1-3. Additionally, the usefulness of this apparatus is impaired by the fact that it cannot be made transparent enough to align the test probe to the device under test.

DE-C-929 094 discloses apparatus for use in the optical alignment of machine shafts and shaft-bearing parts. The apparatus includes a spring-biased ball projecting from its surface and capable of being retracted against the spring bias by pressure applied thereto. The apparatus is to be mounted on the end of a machine shaft, where it is held by a magnet, and is centered on the axis of the shaft by receipt of the spring-biased ball within the central bore of the shaft.

DE-A-2 708 345 discloses a tool retention and centering device including a bearing bush on a mandrel which extends from the closed end of the bush. A transverse eccentric shaft is located within the bush. A movable part in the bearing bush engages the eccentric shaft and moves along the axis of the bush as the eccentric shaft rotates. The moveable part has a part-spherical lower surface which opposes a flat surface of a pressure piece which is spring biased away from the movable part. The pressure piece engages a ball held captive in a hemispherical cover at the open end of the bush. A centering needle is fitted to the ball to project through an aperture in the cover.

DE-B-2 839 753 discloses apparatus for use in precisely aligning the axes of optical fibres. The apparatus consists of two wedge-shaped rockers nested within one another. An optical fibre is retained within the inner rocker by a worm screw. A spring bears down on one end of each rocker and a screw abuts the other end. The position of the optical fibre may be adjusted transverse to its axis by adjustment of these screws, with corresponding springs taking up the slack.

### SUMMARY OF THE INVENTION

The object of the invention is to automatically and precisely align two surfaces, so that they become co-planar or parallel.

The present invention is an apparatus for aligning a first surface with a second surface when they are pushed against each other with a very small and controlled force. The apparatus is defined in claim 1.

When the first surface is pushed against a given non-coplanar second surface, the rocker will readily adjust its position, along with that of the first surface, until the latter becomes co-planar with the second surface. Because the associated friction is significantly lower than sliding friction, only a small force will be required to enact the alignment.

When used in the testing of integrated circuits to align a test probe with the surface of the wafer under test, the present invention provides sufficient parallelism between the test probe and the wafer surface even when the probe holder is not adequately levelled with respect to the wafer chuck. This obviates the current stringent requirements of near-perfect parallelism between the probe holder and the wafer chuck, as well as the tedious and time-consuming procedures associated with satisfying those requirements. Hence, test hardware availability is increased, and the manufacturing cost is reduced.

Additionally, the self levelling action takes place at every single touch-down of the probe. This compensates for the adverse effects of wafer taper and bow, and of thickness variations from one wafer to the other. Consistent probe-to-wafer parallelism ensures that at every touch-down all the contact points of the probe exert uniform contact pressure on the test pads of the device under test and, thus, have a uniform contact resistance. Consequently, the test results obtained are more representative of the actual parameters measured, and incidences of incorrect disposition are reduced.

Another advantage of the present invention is the small force needed to achieve uniform contact at all test points, which has a number of positive consequences: It prevents damaging the device's test pads, thus increasing subsequent assembly yield. It also reduces potential damage to the bulk of the device, and prolongs the service life of the test probes themselves.

Lastly, when the rocker and runner are made out of glass, the invented apparatus has the advantage of being transparent to allow visual observation of the device under test, as well as visual or optical alignment of the test probes to the device's test pads.

The present invention also provides the methods of using the invented apparatus as defined in claims 17 and 18.

### BRIEF DESCRIPTION OF THE DRAWINGS

Figures 1A and 1B show prior-art devices that align surfaces.

Figure 2A shows the preferred embodiment of the surface aligner.

Figures 2B and 2C show alternate exemplary embodiments of the surface aligner.

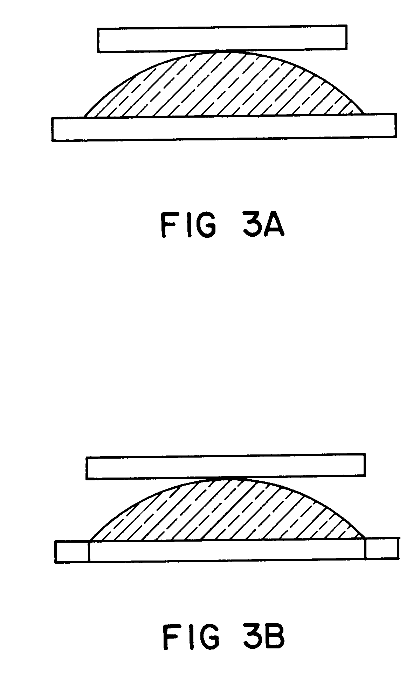

Figures 3A and 3B show alternate exemplary embodiments of the surface aligner.

Figure 4A shows the preferred embodiment of the first surface.

Figures 4B and 4C show alternate exemplary embodiments of the first surface.

Figure 5 shows a tool used to manufacture the device of Figure 2A-2C.

### DETAILED DESCRIPTION OF THE PREFERRED EMBODIMENT

The preferred embodiment of the invention is used to align an integrated circuit test probe, described in U. S. Patent Application 816,666 entitled Test Probe incorporated herein by reference, with a device under test. The first surface 2-14 is the test probe and the second surface is the device under test. Alternate embodiments of the invention maybe used to align a wide variety of surfaces or other objects.

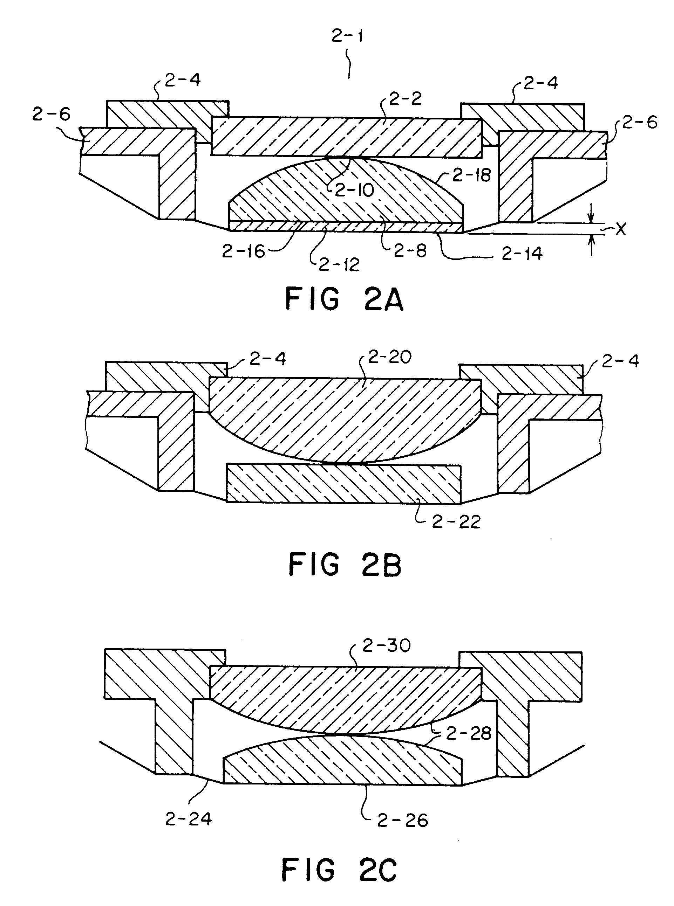

The preferred embodiment of the invention is shown in Figure 2A. A cross section of the frame 2-4 and 2-6 is shown in Figures 2A and 2B. In the preferred embodiment, the frame 2-4 and 2-6 is aluminum, is circular in shape, and has two pieces. A surface aligner 2-1 with a two piece frame may be easier to assemble than a surface aligner 2-1 with a one piece frame. The top piece 2-4 and the bottom piece 2-6 are fastened together with screws. However, the frame 2-4 and 2-6 could be made from a different material and have a different shape. Additionally, the frame 2-4 and 2-6 could be in one piece instead of two.

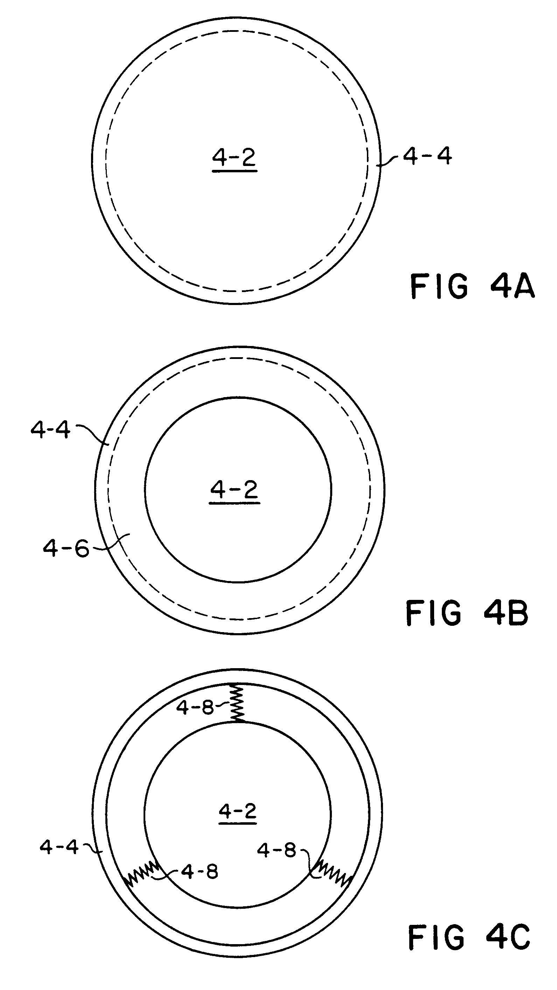

In the preferred embodiment of the invention, the first surface 2-14 is glued to the frame 2-6 with epoxy. However, it could be attached to the frame 2-6 by other means. In the preferred embodiment, the first surface 2-14 is made of polyimide, which is 25.4 µm (1 mil) thick. In alternate embodiments, the first surface 2-14 could have a different thickness and could be constructed from different materials. The first surface 2-14 can be a flexible membrane shown in Figure 4A where the membrane is 4-2 and the frame 4-4. Also, the first surface 2-14 can be a rigid plane shown in Figure 4B and 4C. In Figure 4B, the rigid plane 4-2 is attached to the frame 4-4 with a flexible membrane 4-6. In Figure 4C, the rigid plane 4-2 is attached to the frame 4-4 with elastic devices 4-8. These elastic device 4-8 can be elastic strings or springs.

The runner 2-2 is located next to the frame 2-4. In the preferred embodiment, the runner 2-2 is a polished glass disc with a rectangular cross section. However, it could be made from other materials and have another shape without impairing its functionality. The rocker 2-8 is located between the first surface 2-14 and the runner 2-2. In the preferred embodiment, the rocker 2-8 is a spherical segment made of polished glass, has a radius of curvature of about 1 cm (.4 inches), and has a diameter of about 1,6 cm (.63 inches). Additionally, the rocker 2-8 has a flat surface 2-16 and a spherical surface 2-18. The flat surface 2-16 lies adjacent to the first surface 2-14. The spherical surface 2-18 lies adjacent to the runner 2-2. In alternate embodiments of the invention shown in Figure 2B, the rocker 2-22 has a rectangular cross section and the runner 2-20 has the spherical surface. Also, as shown in Figure 2C, both the rocker 2-26 and the runner 2-30 could have a spherical surface 2-28. The first surface 2-14 and the frame 2-4 and 2-6 hold the first surface, the runner and the rocker together.

The mating surfaces 2-18 and 2-28 of the rocker 2-26 and/or the runner 2-30 can be curved in several different ways. In the preferred embodiment of the invention, the rocker 2-26 is curved as a sphere as described above. In alternative embodiments, this surface can curve in other ways without departing from the scope of the invention. For example, the mating surfaces 2-18 and 2-28 can be curved as a cylinder or curved with different radii of curvature along different axes.

In the preferred embodiment of the invention, a lubricant 2-10 is placed between the runner 2-2 and the rocker 2-8. The preferred embodiment uses mineral oil as the lubricant 2-10, but many other kinds of lubricant can be used. As shown in Figure 2A, the first surface 2-14 protrudes from the frame 2-6 by about 152.4 µm (.006 inch) in the preferred embodiment. This is necessary to allow contact between the first and second surface while keeping the frame away from the first surface.

The preferred embodiment of the invention precisely aligns two non-coplanar surfaces. The mechanism described compensates for macro non-coplanarity between the surfaces. However, surfaces usually have some micro non-coplanarity. For example, the height of the test probe's contact pads can vary. Also, the surface may have gouges. In order to compensate for variations in micro non-coplanarity, the preferred embodiment has an elastic compensational layer 2-12 that compresses according to height variations of the surfaces.

When force is applied to the runner 2-2 through the frame 2-4, it pushes the rocker 2-8 and the first surface towards the second surface. This causes the rocker 2-8 to rotate by rolling on the runner 2-2 so that the first surface 2-14 aligns with the second surface.

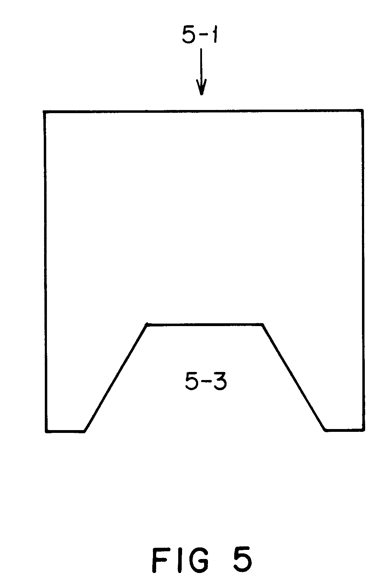

The surface aligner 2-1 is constructed by gluing the first surface 2-14 to the frame 2-6 and by placing the rocker 2-8 into the resulting niche. The rocker 2-8 must be centered inside the frame 2-6. This can be accomplished by a centering tool 5-1 as shown in Figure 5. The outside diameter of the centering tool 5-1 is slightly smaller than the inside diameter of the frame 2-6, and the tool 5-1 has a conical inner surface to center the rocker 2-8 inside the frame 2-6. Next, a lubricant 2-10 is placed on the surface of the rocker 2-8 that faces the runner 2-2. Next, the upper frame 2-4 with the runner 2-2 is attached to the lower frame 2-6 with the rocker 2-8.

The surface aligner 2-1 is used by placing it on the device under test and applying force to the frame in the direction of the device under test. The rocker 2-8 will automatically rotate to align the first surface 2-14 with the second surface.

## Claims

1. Apparatus which self-adjusts to ensure parallel contact between a first surface and a second surface as and when pressure is applied to and transmitted through the apparatus to press the surfaces together, comprising a runner (2-2) to which pressure is to be applied, a movable rocker (2-8), adapted to roll across the runner (2-2) between limiting angular positions and to transmit pressure to the said first surface, and harnessing means (2-6) for holding the rocker (2-8) and the runner (2-2) together.

2. Apparatus as in Claim 1 wherein the rocker (2-8) has a convex surface (2-18) which is adapted to roll across the runner (2-2).

3. Apparatus as in Claim 1 wherein the runner (2-20) has a convex surface across which the rocker (2-22) is adapted to roll.

4. Apparatus as in Claim 2 or 3 wherein the said convex surface is a spherical surface.

5. Apparatus as in Claim 2 or 3 wherein the said convex surface is a cylindrical surface.

6. Apparatus as in Claim 2 or 3 wherein the said convex surface has different radii of curvature along different axes.

7. Apparatus as in any preceding Claim wherein the rocker (2-8) and the runner (2-2) are transparent so that the said first surface is visible through the apparatus.

8. Apparatus as in any preceding Claim in which the rocker further comprises padding means (2-12) remote from the runner to compensate for bumps in said first surface and said second surface.

9. An apparatus as in any preceding Claim wherein the harnessing means (2-6) includes an elastic device to bias the rocker (2-8) towards a quiescent position.

10. An apparatus as in Claim 9 wherein the harnessing means (2-6) further comprises a rigid surface (4-2) located adjacent to the rocker (2-8) and attached to the said elastic device.

11. An apparatus as in Claim 9 or 10 wherein the said elastic device is a flexible membrane.

12. An apparatus as in Claim 9 or 10 wherein the said elastic device is a plurality of elastic strings.

13. An apparatus as in Claim 9 or 10 wherein the said elastic device is a plurality of springs (4-8).

14. An apparatus as in any preceding Claim wherein the said first surface is a surface of a test probe.

15. Apparatus as in any one of Claims 1-9 wherein the said first surface is a surface (2-14) of the apparatus.

16. A method of using the apparatus of Claim 1 to ensure parallel contact between a first surface and a second surface, the method comprising placing the apparatus behind the said first surface and remote from the second surface, and pushing the runner of the apparatus towards the said second surface.

17. A method of ensuring parallel contact between the said first surface of the apparatus of Claim 15 and a second surface comprising pushing the runner of the apparatus towards the said second surface.

## Patentansprüche

1. Vorrichtung, die sich selbst einstellt, um einen parallelen Kontakt zwischen einer ersten Oberfläche und einer zweiten Oberfläche sicherzustellen, während und wenn Druck an die Vorrichtung angelegt und über die Vorrichtung übertragen wird, um die Oberflächen zusammenzudrücken, mit einem Läufer (2-2), an den der Druck anzulegen ist, einer beweglichen Wippe (2-8), die zwischen Winkel-Grenzpositionen auf dem Läufer (2-2) abwälzen und Druck auf die erste Oberfläche übertragen kann, und einer Haltevorrichtung (2-6) zum Zusammenhalten der Wippe (2-8) und des Läufers (2-2).

2. Vorrichtung nach Anspruch 1, bei der die Wippe (2-8) eine konvexe Oberfläche (2-18) aufweist, die auf dem Läufer (2-2) abwälzen kann.

3. Vorrichtung nach Anspruch 1, bei der der Läufer (2-20) eine konvexe Oberfläche hat, auf der die Wippe (2-22) abwälzen kann.

4. Vorrichtung nach Anspruch 2 oder 3, bei der die konvexe Oberfläche eine sphärische Oberfläche ist.

5. Vorrichtung nach Anspruch 2 oder 3, bei der die konvexe Oberfläche eine zylindrische Oberfläche ist.

6. Vorrichtung nach Anspruch 2 oder 3, bei der die konvexe Oberfläche unterschiedliche Krümmungsradien längs verschiedener Achsen aufweist.

7. Vorrichtung nach einem der vorangehenden Ansprüche, bei der die Wippe (2-8) und der Läufer (2-2) transparent sind, so daß die erste Oberfläche durch die Vorrichtung hindurch sichtbar ist.

8. Vorrichtung nach einem der vorangehenden Ansprüche, bei der die Wippe ferner eine Polstervorrichtung (2-12) aufweist, die vom Läufer entfernt ist, um Unebenheiten in der ersten Oberfläche und der zweiten Oberfläche auszugleichen.

9. Vorrichtung nach einem der vorangehenden Ansprüche, bei der die Haltevorrichtung (2-6) eine elastische Einrichtung zum Vorspannen der Wippe (2-8) gegen eine Ruheposition aufweist.

10. Vorrichtung nach Anspruch 9, bei der die Harnischvorrichtung (2-6) ferner eine starre Oberfläche (4-2) aufweist, die der Wippe (2-8) benachbart angeordnet und an der elastischen Einrichtung befestigt ist.

11. Vorrichtung nach Anspruch 9 oder 10, bei der die elastische Einrichtung eine flexible Membran ist.

12. Vorrichtung nach Anspruch 9 oder 10, bei der die elastische Einrichtung aus mehreren elastischen Schnüren besteht.

13. Vorrichtung nach Anspruch 9 oder 10, bei der die elastische Einrichtung aus mehreren Federn (4-8) besteht.

14. Vorrichtung nach einem der vorangehenden Ansprüche, bei der die erste Oberfläche die Oberfläche einer Prüfsonde ist.

15. Vorrichtung nach einem der Ansprüche 1 bis 9, bei der die erste Oberfläche eine Oberfläche (2-14) der Vorrichtung ist.

16. Verfahren zum Verwenden der Vorrichtung nach Anspruch 1, um einen parallelen Kontakt zwischen einer ersten Oberfläche und einer zweiten Oberfläche zu gewährleisten, bei dem die Vorrichtung hinter der ersten Oberfläche und von der zweiten Oberfläche entfernt plaziert wird und bei dem der Läufer der Vorrichtung in Richtung auf die zweite Oberfläche geschoben wird.

17. Verfahren zum sicherstellen des parallelen Kontaktes zwischen der ersten Oberfläche der Vorrichtung nach Anspruch 15 und einer zweiten Oberfläche, bei dem der Läufer der Vorrichtung in Richtung auf die zweite Oberfläche geschoben wird.

## Revendications

1. Appareil qui s'ajuste de lui-même afin d'assurer un contact parallèle en une première surface et une deuxième surface dès lors qu'une pression est appliquée à l'appareil et est transmise par son intermédiaire afin d'appuyer les surfaces l'une contre l'autre, comprenant un patin (2-2) auquel une pression doit être appliquée, une bascule mobile (2-8) apte à rouler en travers du patin (2-2) entre des positions angulaires formant limites et à transmettre une pression à ladite première surface, et un moyen de harnais (2-6) pour retenir ensemble la bascule (2-8) et le patin (2-2).

2. Appareil selon la revendication 1 dans lequel la bascule (2-8) comporte une surface convexe (2-18) qui est apte à rouler en travers du patin (2-2).

3. Appareil selon la revendication 1 dans lequel le patin (2-20) comprend une surface convexe à travers de laquelle la bascule (2-22) est apte à rouler.

4. Appareil selon la revendication 2 ou 3 dans lequel ladite surface convexe est une surface sphérique.

5. Appareil selon la revendication 2 ou 3 dans lequel ladite surface convexe est une surface cylindrique.

6. Appareil selon la revendication 2 ou 3 dans lequel les rayons de courbure de ladite surface convexe sont différents le long d'axes différents.

7. Appareil selon une revendication précédente quelconque dans lequel la bascule (2-8) et le patin (2-2) sont transparents de sorte que ladite première surface est visible à travers l'appareil.

8. Appareil selon une revendication précédente quelconque dans lequel la bascule comprend en outre un moyen de rembourrage (2-12) à distance du patin afin de compenser des irrégularités dans ladite première surface et ladite deuxième surfaces.

9. Appareil selon une revendication précédente quelconque dans lequel moyen de harnais (2-6) inclut un dispositif élastique pour solliciter la bascule (2-8) vers une position de repos.

10. Appareil selon la revendication 9, dans lequel le moyen de harnais (2-6) comprend en outre une surface rigide (4-2) située près de la bascule (2-8) et attachée audit dispositif élastique;

11. Appareil selon la revendication 9 ou 10 dans lequel ledit dispositif élastique est une membrane flexible.

12. Appareil selon la revendication 9 ou 10 dans lequel ledit dispositif élastique consiste en une série de cordes élastiques.

13. Appareil selon la revendication 9 ou 10 dans lequel ledit dispositif élastique consiste en une série de ressorts (4-8).

14. Appareil selon une revendication précédente quelconque dans lequel ladite première surface est une surface de sonde d'essais.

15. Appareil selon l'une quelconque des revendications 1 à 9 dans lequel ladite première surface est une surface (2-14) de l'appareil.

16. Un procédé utilisant un appareil selon la revendication 1 pour assurer un contact parallèle entre une première surface et une deuxième surface, le procédé comprenant l'étape consistant à placer l'appareil derrière ladite première surface et à distance de la deuxième surface, et à pousser le patin de l'appareil vers ladite deuxième surface.

17. Un procédé destiné à assurer un contact parallèle entre ladite première surface de l'appareil de la revendication 15 et une deuxième surface comprenant l'étape consistant à pousser le patin de l'appareil vers ladite deuxième surface.
